Europäisches Patentamt

European Patent Office

Office européen des brevets

(19)

(11) Numéro de publication : **0 068 952**
**B1**

# (12) FASCICULE DE BREVET EUROPÉEN

(45) Date de publication du fascicule du brevet :
30.01.85

(21) Numéro de dépôt : **82401046.6**

(22) Date de dépôt : **09.06.82**

(51) Int. Cl.⁴ : **B 23 Q   1/16**

(54) **Perfectionnements aux machines-outils à grande productivité.**

(30) Priorité : **19.06.81 FR 8112097**

(43) Date de publication de la demande :
**05.01.83 Bulletin 83/01**

(45) Mention de la délivrance du brevet :
**30.01.85 Bulletin 85/05**

(84) Etats contractants désignés :
**AT BE CH DE GB IT LI LU NL SE**

(56) Documents cités :
**DE-A- 1 552 649**
**DE-A- 2 460 368**
**DE-C-   368 843**
**FR-A- 2 307 615**
**GB-A- 2 023 027**

(73) Titulaire : **CENTRE D'ETUDES DU FRAISAGE (C.E.F.)**
**80 rue des Meuniers**
**F-92220 Bagneux (FR)**

(72) Inventeur : **Sachot, Michel**
**55, rue Curie**
**F-91400 Saclay (FR)**

(74) Mandataire : **Loyer, Yves et al**
**CABINET PIERRE LOYER 18, rue de Mogador**
**F-75009 Paris (FR)**

Jouve, 18, rue St-Denis, 75001 Paris, France

EP 0 068 952 B1

## Description

L'évolution actuelle de la technique des machines-outils tend à répondre aux besoins de productivité de l'industrie par la fabrication de machines dont le fonctionnement est susceptible d'un haut degré d'automatisation par programmation des opérations d'usinage et changements d'outils automatiques.

L'association d'un changeur automatique d'outil à une machine-outil est connue depuis longtemps.

Mais pour augmenter la productivité des machines-outils, on tend aujourd'hui à construire des machines dans lesquelles les opérations de réglage de la position de broche peuvent se faire automatiquement, ce qui conduit à adopter, soit des têtes multibroches, soit des têtes monobroches à deux positions de travail, l'une horizontale, l'autre verticale, des moyens mécaniques appropriés étant prévus pour effectuer automatiquement le changement de position et l'indexation ou l'immobilisation rigoureuse de la tête de broche par rapport à son support dans chacune de ces positions.

Une solution de ce type est décrite au brevet français n° 2 307 615 et permet d'obtenir une machine monobroche ayant une position verticale et une position horizontale, avec commande automatique du changement de position et indexation rigoureuse ; le changeur d'outil peut alors être prévu pour opérer sur l'une de ces positions.

Dans la machine décrite audit brevet FR-A-2 307 615, la tête porte-broche est montée pivotante autour d'un axe incliné à 45° par rapport au plan de travail horizontal et il est prévu des moyens de commande automatique de la rotation de la tête associés à des moyens de verrouillage en position indexée par couronnes à dentures frontales, moyen bien connu et commercialisé sous les termes de couronnes à dentures HIRTH ou « CURVIC COUPLING ». Ce document a servi de base pour l'élaboration du préambule.

L'ensemble peut facilement être commandé de manière automatique suivant une séquence préétablie par des moyens de type également connus.

Cependant, les machines de ce type actuellement connues présentent divers inconvénients :

Les machines dans lesquelles l'axe de rotation de la tête de broche par rapport à son support est parallèle au plan de travail horizontal de la machine ont pour inconvénient une distance importante entre les projections sur un plan horizontal du nez de broche dans ses positions horizontale et verticale, cette distance étant égale au rayon de la tourelle et pouvant atteindre 15 à 20 cm.

Dans les machines du type HURÉ, dites « à tête universelle », dans lesquelles la tête de broche tourne selon un axe incliné à 45°, cette distance peut être considérablement réduite, mais par contre, lorsque cette tête est montée sur un bélier ou support à glissières de guidage situées sur le côté, l'outil monté dans la broche vient interférer avec les glissières de guidage lors du passage d'une position à une autre.

Enfin et surtout, ces machines ne permettent qu'une seule position de travail à broche horizontale alors que l'usinage automatique des pièces complexes ou lourdes est grandement facilité si l'on dispose de deux positions de travail horizontal faisant entre elles un angle appréciable de préférence égal à 90° et formant, avec la position de travail vertical, un trièdre de préférence rectangle, l'une de ces positions étant parallèle à l'axe principal d'entraînement, ce qui donne trois positions de travail parallèles aux trois axes principaux de la machine.

Il a déjà été proposé un dispositif permettant d'amener une pièce à usiner, par rotation de la table de serrage dans des positions telles que les surfaces à usiner soient parallèles à un système de coordonnées orthogonales et à hauteur constante par rapport à la base du dispositif.

Un tel dispositif, décrit au brevet de la République Fédérale Allemande n° 1 552 649 au nom de OERLIKON comprend une table de serrage, un socle et un assemblage tubulaire, le socle formant un angle α, de valeur 35° 15′ 53,4″, avec le pied monté sur ledit socle et la table de serrage forme avec le pied monté sur celle-ci le même angle α, les deux pieds étant montés aux extrémités de l'assemblage tubulaire et la table de serrage étant rotative autour de l'axe de l'assemblage tubulaire.

Mais un tel dispositif, destiné à permettre le travail selon trois plans orthogonaux par des moyens évitant l'emploi de machines-outils complexes et coûteuses ne permet ni une grande précision, ni une automatisation des opérations.

La présente invention a pour objet une machine ayant les avantages de la machine monobroche à tête universelle, évitant les interférences entre outils et glissières, permettant de réaliser en plus des deux positions verticale et horizontale connues, une troisième position horizontale approximativement ou rigoureusement orthogonale aux deux autres.

La machine selon l'invention est une machine du type monobroche montée pivotante sur un support, tel qu'un bélier coulissant autour d'un axe incliné d'un angle α par rapport au plan de travail horizontal de la machine et comprenant en outre des moyens de commande automatique de la rotation de la tête associés à des moyens de verrouillage en position indexée, caractérisée en ce que l'angle α est compris entre 30° et 40° et de préférence égal à 35° 15′ 52″, l'angle entre l'axe de la broche et l'axe ayant pour valeur le complément à 90° de l'angle α, et la projection horizontale de l'axe étant oblique par rapport à la projection de l'axe principal d'entraînement d'un angle γ d'obliquité de l'ordre de et de préférence égal à 45°, et tel que l'une au moins des deux positions horizontales soit parallèle à l'un des trois axes principaux de la machine.

Lorsque l'angle α n'est pas rigoureusement égal à 35° 15′ 52″ tout en étant voisin de cette valeur et compris entre 30° et 40°, il existe toujours deux positions horizontales et une position verticale, mais les deux positions horizontales ne sont pas orthogonales et l'angle γ est de préférence choisi en fonction de l'angle α, de telle sorte que l'une des deux positions horizontales soit parallèle à l'un des trois axes principaux de la machine.

Lorsque l'angle α est rigoureusement égal à 35° 15′ et 52″ et l'angle γ à 45°, la tête de broche peut prendre trois positions de travail indexables orthogonales selon les trois axes principaux de la machine, ce qui constitue la forme préférée de réalisation de l'invention.

Outre les avantages précités, l'invention permet de disposer d'une position horizontale de changement d'outil distincte de la position verticale et de la position horizontale parallèle à l'axe d'entraînement ce qui permet plus facilement d'effectuer le changement d'outil dans une position où l'outil ne risque pas d'interférer avec la pièce à travailler, et ce qui facilite le positionnement du changeur d'outils.

Lorsque la broche est montée sur un bélier coulissant horizontalement et parallèlement à l'axe principal d'entraînement les deux directions horizontales sont donc dans ce cas respectivement parallèle et approximativement ou rigoureusement perpendiculaire à la direction de coulissement horizontal du bélier porte-broche, la position rigoureusement perpendiculaire étant obtenue pour les valeurs préférées des angles α et γ.

L'entraînement en rotation de la tête porte-broche pourra être réalisé de différentes manières notamment par couronne entraînée par pignon, ou par pignon entraîné par vis ou crémaillère ; il existe de même des solutions à la disposition de l'homme de l'art pour le blocage de la tête en position angulaire rigoureuse, notamment par couronnes à denture frontales du type répandu sous la désignation en langue anglaise de « CURVIC COUPLING » et l'invention n'est pas limitée à un mode d'entraînement et/ou d'indexage particulier.

De même, divers systèmes de changeurs d'outils connus peuvent être associés ou adaptés à une machine munie des dispositions de l'invention étant remarqué que, selon l'invention, on dispose de deux positions horizontales dont l'une peut être utilisée comme position de changement d'outil en évitant les problèmes d'interférence du changeur d'outil avec la broche en position horizontale de travail.

L'invention est plus amplement décrite ci-après avec référence aux dessins annexés sur lesquels :

La figure 1 est une vue schématique latérale d'ensemble d'une machine-outil selon l'invention ;

Les figures 2, 3 et 4 sont des vues schématiques frontales du bélier muni de la tête porte-broche dans ses trois positions ;

Les figures 5, 6 et 7 sont des vues schématiques latérales illustrant les mêmes positions ;

La figure 8 est une vue de dessous du bélier ;

La figure 9 est une vue en coupe partielle selon II-II des figures 2, 3, 4 ;

La figure 10 est une vue en coupe partielle selon I-I de la figure 8.

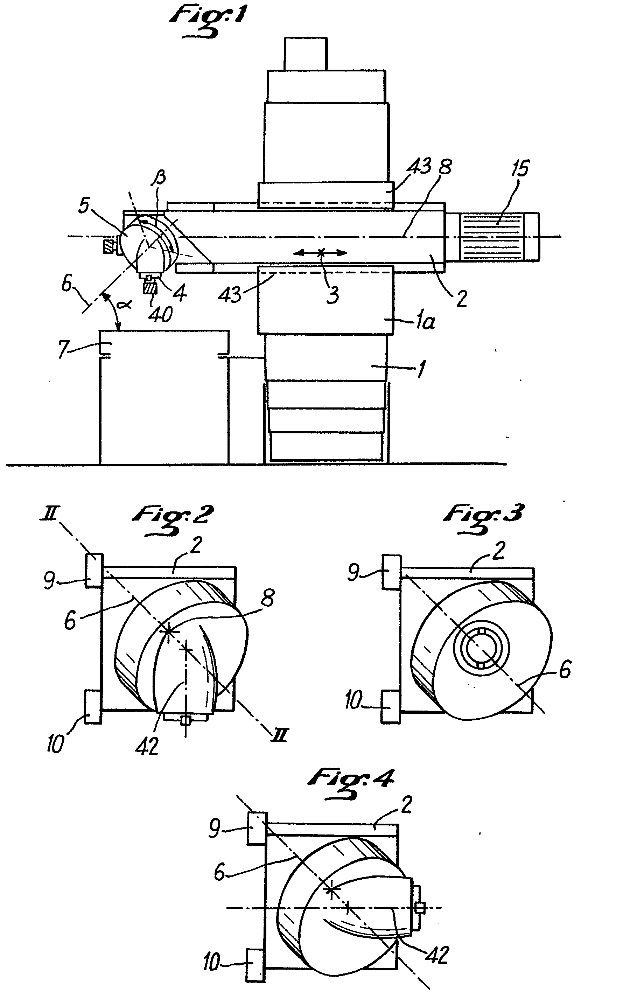

En se reportant aux figures 1 à 8, on voit que la machine selon l'invention comporte un bélier 2 muni d'une tête du type monobroche rotative 5 portant une broche 4 qui est entraînée dans toutes les positions angulaires de la tête comme toutes les têtes de ce type ; le bélier est déplaçable selon les flèches 3 et l'axe principal d'entraînement de la broche 4 par le moteur 15 est représenté en 8.

Dans l'exemple représenté, le bélier 3 est monté coulissant par des glissières latérales 9, 10 sur une machine-outil 1, par exemple par l'intermédiaire d'une console 1a susceptible de coulissement vertical sur le bâti de la machine et portant les glissières 43. En 7 est représentée la table 7 avec son plan de travail horizontal.

Conformément à l'invention, la tête monobroche 5 est montée rotative sur le bélier 2 selon un axe 6 qui est incliné par rapport au plan horizontal de travail de la table 7 d'un angle α de l'ordre de 35° 15′ 52″, et l'angle entre l'axe 42 de la broche 4 et l'axe 6 est égal au complément de l'angle α.

En outre, le plan vertical comprenant l'axe 6 fait avec le plan vertical comprenant l'axe 8 un angle γ (figure 8) de l'ordre de 45°.

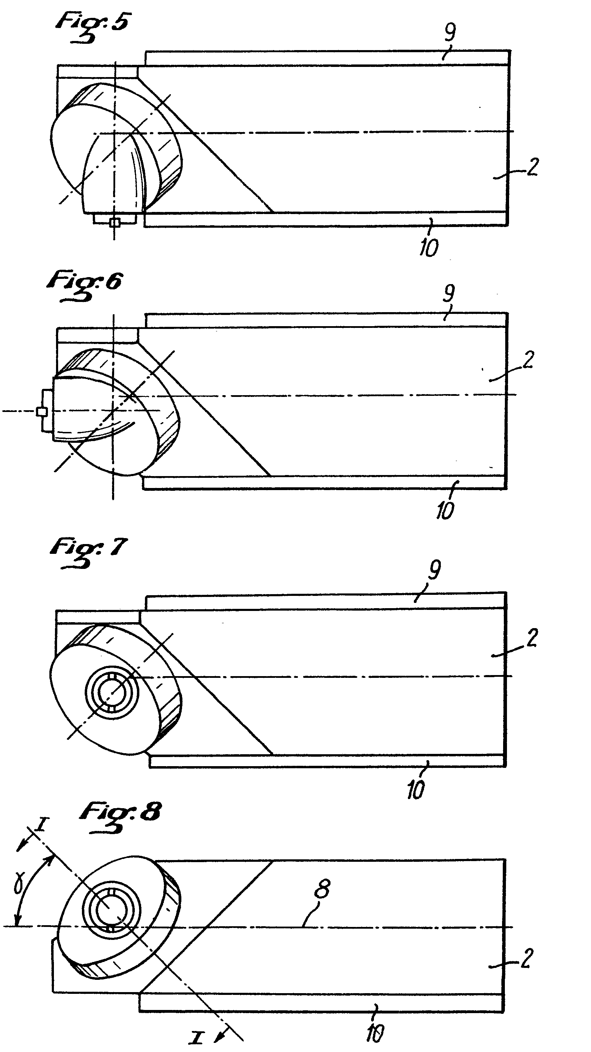

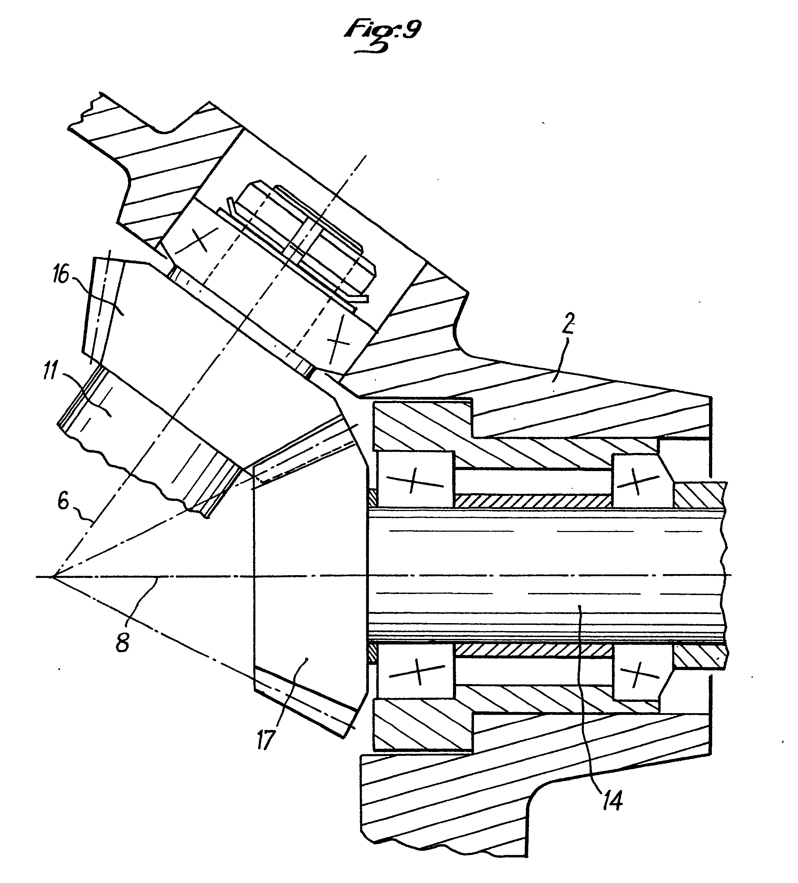

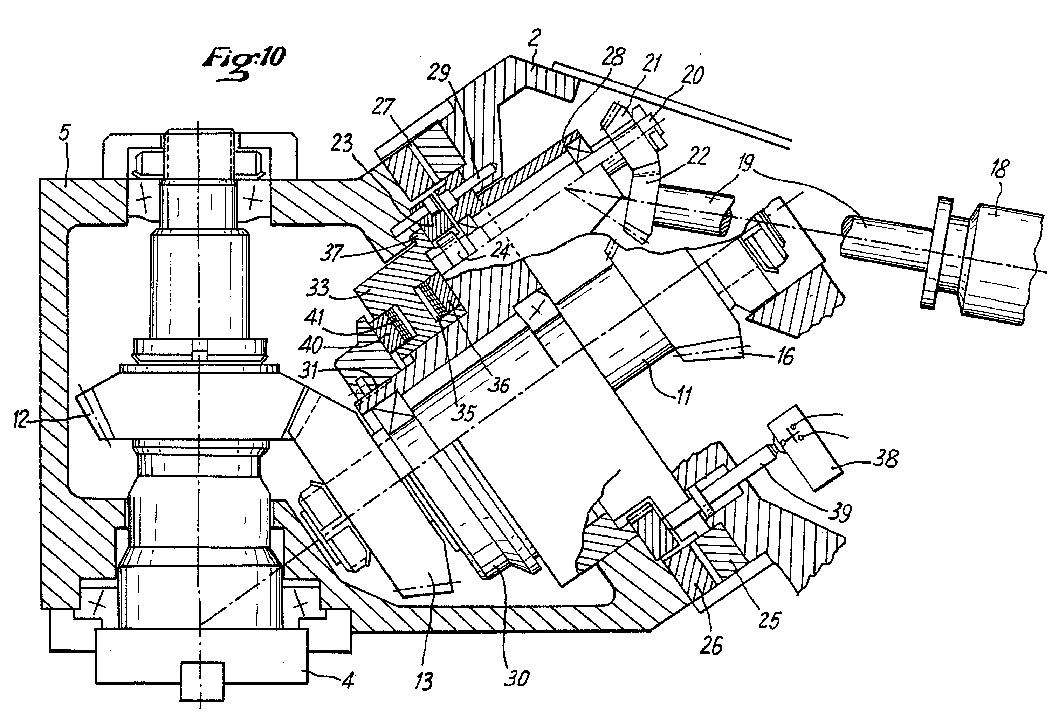

Lorsque les angles α et γ ont exactement les valeurs ci-dessus, la rotation de la tête 5 autour de l'axe 6 permet à la broche 4 d'occuper une position verticale (figures 2 et 5), une position horizontale d'axe parallèle à l'axe 8 (figures 3 et 6) et une position horizontale d'axe perpendiculaire à l'axe 8 (figures 4 et 7).

Une telle machine n'a pas été jusqu'à ce jour réalisée. Certaines machines monobroches, en effet, comportent une position de travail verticale et une position horizontale selon deux des axes principaux de la machine (mais non pas selon les trois axes orthogonaux principaux, soit que l'on utilise une tête pivotante selon un axe horizontal soit que l'on utilise une tête pivotante de façon connue selon un axe incliné à 45° sur l'horizontale et situé dans le plan vertical contenant l'axe d'entraînement.

Mais il n'a pas été proposé à ce jour de tête pivotante monobroche selon un axe oblique (selon les angles préférés ci-dessus spécifiés) dans deux directions à la fois et permettant ainsi d'obtenir une position de travail dans chacun des trois axes principaux de la machine, et ceci, avec un seul axe de pivotement de la tête ; l'avantage d'une telle réalisation est de permettre d'automatiser le travail de fraisage selon trois axes de coordonnées spatiales rectangulaires, ce qui permet l'usinage automatique complet de pièces de formes complexes sans avoir à les déplacer sur la table de travail.

En effet, en prévoyant des moyens de commande automatique de la rotation de la tête 5 et de blocage de cette tête dans des positions prédéterminées rigoureuses, on obtient ainsi une machine-outil à tête monobroche indexable automatiquement selon trois positions de travail disposée en trièdre rectangle selon les trois axes principaux de la machine l'une de ces positions pouvant être utilisée pour effectuer un changement d'outil automatique, tandis que les deux autres restent dépourvues d'interférence avec le dispositif changeur d'outil.

De tels moyens de commande automatique et de blocage ont déjà été décrits et utilisés en rapport avec divers types de têtes tournantes, soit monobroches, soit multibroches, ainsi que l'association de telles têtes avec un changeur d'outil, notamment dans les brevets USA 3.238.615, France 1.556.941, France 2.255.142 et n'ont pas besoin d'être décrits.

Les figures 9 et 10 illustrent cependant une réalisation mécanique possible.

La figure 9 montre que sur l'arbre d'entraînement principal 14 porté par le bélier 2 et entraîné par le moteur 15 est monté un pignon 17 qui entraîne le pignon 16 monté sur l'arbre 11 situé selon l'axe 6 de la tête. Il est à préciser que l'angle entre les axes 8 et 6 n'est pas l'angle γ celui-ci étant l'angle des projections horizontales de ces axes.

La figure 10 montre que l'arbre 11 entraîne les pignons 12 et 13 et par suite la broche 4. La tête 5 est montée pivotante autour de l'arbre 11 ; sa rotation est assurée par l'arbre 19 entraîné par exemple par le moteur 18 et entraînant l'arbre 20 par les pignons 21, 22 ; l'arbre 20 entraîne le pignon 24 qui coopère avec la couronne 23 prévue dans la tête 5.

Le blocage en position est assuré par les couronnes à denture plates 25 et 26 l'une solidaire du bélier 2 et l'autre de la tête 5, dont les dents sont en nombre tel qu'après une rotation de l'angle β désiré (figure 1) les dents des deux couronnes se retrouvent face à face (système curvic coupling). Dans l'exemple représenté dans lequel α a exactement la valeur spécifiée, les rotations de la tête pour passer d'une position à la suivante correspondent toutes à un angle β égal à 120°.

Pour permettre la rotation de la tête, les couronnes 25 et 26 sont écartées et elles sont au contraire pressées l'une contre l'autre en position de travail. Ceci peut être obtenu notamment par des moyens hydrauliques ou mécaniques. Dans l'exemple représenté, ces moyens sont hydrauliques, l'envoi de la pression d'huile dans les chambres 35 ou 41, sous les pistons 36 ou 40 provoquant respectivement l'écartement et le désengagement des couronnes ou leur application à force.

Il serait équivalent de prévoir un rappel en position de verrouillage par ressort au lieu du rappel hydraulique par la chambre 41 et le piston 40 : il suffit pour cela de remplacer le piston 40 par un ou plusieurs ressorts repoussant la rondelle 33 vers le bélier 2.

Lorsque l'angle α n'est pas rigoureusement égal à 35° 15' 52" tout en étant voisin de cette valeur et compris entre 30° et 40°, il existe toujours deux positions horizontales et une position verticale, mais les deux positions horizontales ne sont pas orthogonales et l'angle γ est de préférence choisi en fonction de l'angle α, de telle sorte que l'une des deux positions horizontales soit parallèle à l'un des trois axes principaux de la machine, par exemple l'axe principal d'entraînement 8, et/ou l'axe de coulissement du bélier 2 et/ou la direction perpendiculaire à la direction longitudinale de la table ; l'autre position horizontale fera avec la précédente un angle différent de 90° mais utilisable, conformément à l'invention, au moins comme position de changement d'outil. Il est en effet avantageux d'utiliser comme position de changement d'outil une position horizontale ou non différente de celle qui est coaxiale à l'axe principal de travail horizontal car cela permet une disposition du changeur d'outil dépourvue d'interférences avec les positions de travail principales qui sont les positions verticale et horizontale coaxiale à l'entraînement principal, et en particulier d'éviter les problèmes posés par une interférence possible, au cours de l'opération de changement d'outil, entre l'outil et la pièce à usiner.

En tout état de cause, un angle α de l'ordre de 35° 15' 52", et plus précisément compris entre 30° et 40°, conduit à l'adoption d'angles γ de l'ordre de 45° ce qui assure une rotation de la tête porte-broche 5 très améliorée en ce qui concerne son interférence avec le système de glissières latérales du bélier 2. Le cône engendré par l'axe 6, lors de sa rotation est en effet très oblique par rapport à l'axe 8 et cette obliquité écarte la broche du plan des glissières 9 et 10, cela permet de diminuer le porte à faux du bélier 2 et son encombrement par rapport au plan des glissières.

Etant donné le nombre élevé des dispositions connues pour la réalisation d'un changeur automatique d'outil, il n'est pas nécessaire de représenter un tel changeur pour la description de l'invention ; on pourra adopter, par exemple, un changeur tel que celui décrit par la demanderesse dans son brevet français FR-A-2 410 534 déposé le 30 novembre 1977.

De même, les dispositions de blocage en position angulaire rigoureuses par couronnes dentées plates pourront être remplacées par un système du type dans lequel un doigt lié au bélier est introduit dans un trou prévu dans la tête rotative 5 (ou l'inverse).

On pourra de ce fait utiliser en combinaison avec les dispositions de la présente invention les dispositions décrites au brevet européen EP-A-0 070 208 déposé au nom de la demanderesse, et non publié à la date du dépôt de la présente demande selon lesquelles les moyens de verrouillage de la tête dans une position angulaire déterminée sont du type comprenant un couple de bagues expansibles diamétralement opposées prévues sur le disque fixe du support 2 et introduites dans un couple d'alésages correspondant du disque mobile lié à la tête 5, les disques fixe et mobile glissant l'un sur l'autre selon une surface plane perpendiculaire à l'axe de rotation 6 sous l'effet d'un entraînement comportant un jeu de centrage prédéterminé.

Sur les dessins annexés, on a pris comme exemple une machine dans laquelle la tête est montée sur un bélier coulissant horizontalement perpendiculairement à la table. Mais il va de soi que la tête selon l'invention peut être montée sur n'importe quel type de support, fixe ou mobile dans une ou plusieurs directions et sur n'importe quel type de machine-outil.

**Revendications**

1. Machine-outil du type à tête monobroche (5) montée pivotante sur un support (2), tel qu'un bélier coulissant autour d'un axe (6) incliné d'un angle α par rapport au plan de travail horizontal de la machine et comprenant en outre des moyens de commande automatique de la rotation de la tête (5) associés à des moyens de verrouillage en position indexée, caractérisée en ce que l'angle α est compris entre 30° et 40° et de préférence égal à 35° 15′ 52″, l'angle entre l'axe (42) de la broche et l'axe (6) ayant pour valeur le complément à 90° de l'angle α, et la projection horizontale de l'axe (6) étant oblique par rapport à la projection de l'axe principal d'entraînement (8) d'un angle γ d'obliquité de l'ordre de et de préférence égal à 45°, et tel que l'une au moins des deux positions horizontales soit parallèle à l'un des trois axes principaux de la machine.

2. Machine-outil selon la revendication 1, caractérisée en ce qu'elle comporte un changeur d'outil disposé pour opérer sur la position horizontale, perpendiculaire à l'axe principal d'entraînement (8).

3. Machine-outil selon la revendication 1, caractérisée en ce que les moyens de commande automatique sont du type comprenant une couronne dentée (23) liée à la tête (5) et entraînée par un pignon (24) porté par le bélier (2).

4. Machine-outil selon l'une quelconque des revendications précédentes, caractérisée en ce que les moyens de blocage en position angulaire sont du type comprenant des couronnes à denture plate portées l'une (25) par le bélier (2), l'autre (26) par la tête (5) munies de dentures telles qu'elles soient en correspondance au terme de rotation de 120° et comportant des moyens de désengagement en vue de la rotation et de pressage en vue du verrouillage.

5. Machine-outil selon l'une quelconque des revendications 1 et 2, caractérisée en ce que les moyens de verrouillage de la tête dans une position angulaire déterminée sont du type comprenant un couple de bagues expansibles diamétralement opposées, prévues sur le disque fixe du support (2) et introduite dans un couple d'alésages correspondant du disque mobile lié à la tête (5) les disques fixe et mobile glissant l'un sur l'autre selon une surface plane perpendiculaire à l'axe de rotation (6) sous l'effet d'un entraînement comportant un jeu de centrage prédéterminé.

**Claims**

1. Machine-tool of the type comprising a single-spindle head (5) rotatably mounted on a support (2) such as a sliding ram for rotating about an axis (6) inclined by an angle α relatively to the horizontal working plane of the machine and further comprising automatic means for controlling the rotation of the head (5) associated with means for locking the head in indexed position, characterized in that the angle α is comprised between 30° and 40° and preferably equal to 35° 15′ 52″ while the angle between the axis (42) of the spindle and the axis (6) is equal to the 90° complement of angle α, the horizontal projection of axis (6) being oblique relatively to the projection of the main drive axis (8) by a slant angle γ of the order of about 45° and preferably equal to 45° and such that at least one of the two horizontal positions will be parallel to one of the three main axes of the machine.

2. Machine-tool according to claim 1, characterized in that it comprises a tool-changing device arranged for operating on the horizontal position, perpendicular to the main drive axis (8).

3. Machine-tool according to claim 1, characterized in that the automatic control means are of the type comprising a toothed rim (23) linked to the head (5) and driven by a pinion (24) carried by the ram (2).

4. Machine-tool according to any of the previous claims, characterized in that the angular position locking means are of the type comprising toothed rims with frontal teeth, one (25) of said rims being carried on the ram (2) and the other (26) on the head (5), said rims being provided with sets of teeth such as to be in correspondence after a 120° rotation and comprising releasing means for allowing a rotation and pressure means for locking purposes.

5. Machine-tool according to any of claims 1 and 2, characterized in that the means for locking the head in a determined position are of the type comprising a couple of diametrically opposed expansible rings provided on the stationary disc of the support (2) and introduced into a corresponding couple of bores in the mobile disk linked to the head (5), the fixed disc and the mobile disc sliding against each other along a planar surface perpendicular to the rotation axis (6) under the effect of a drive having a predetermined centering clearance.

**Ansprüche**

1. Einspindelkopf-Werkzeugmaschine, deren Spindelkopf (5) schwenkbar um eine um einen Winkel α gegen die horizontale Arbeitsebene der Maschine geneigte Achse (6) auf einem Support (2), wie etwa einem Schlitten, angeordnet ist, mit Mitteln zur automatischen Steuerung der Drehung des Kopfes (5), die Mitteln zur Verriegelung in einer indizierten Position zugeordnet sind, dadurch gekennzeichnet, daß der Winkel α zwischen 30° und 40° liegt und vorzugsweise gleich 35° 15' 52" ist, daß der Winkel zwischen der Spindelachse (42) und der Achse (6) 90°-α beträgt, und daß die horizontale Projektion der Achse (6) schräg zur Projetion der Hauptantriebsachse (8) ist, wobei der Winkel γ der Schräge in der Größenordnung von vorzugsweise gleich 45° ist, derart, daß mindestens eine der beiden Horizontalpositionen parallel zu einer der drei Hauptachsen der Maschine ist.

2. Werkzeugmaschine nach Anspruch 1, dadurch gekennzeichnet, daß sie eine Werkzeugwechseleinrichtung aufweist, die so angeordnet ist, daß sie in der Horizontalposition, senkrecht zur Hauptantriebsachse (8) arbeitet.

3. Werkzeugmaschine nach Anspruch 1, dadurch gekennzeichnet, daß die Mittel zur automatischen Steuerung einen mit dem Kopf (5) verbundenen Zahnkranz (23) aufweisen, der durch ein von dem Schlitten (2) getragenes Ritzel (24) angetrieben wird.

4. Werkzeugmaschine nach einem der vorhergehenden Ansprüche, dadurch gekennzeichnet, daß die Mittel zum winkelmäßigen Festlegen Zahnkränze mit Planverzahnung aufweisen, von denen der eine (25) durch den Schlitten (2), der andere (26) durch den Kopf (5) getragen wird, und beide Zahnungen aufweisen, die im Einklang mit Drehschritten von 120° stehen und Mittel zum Ausrücken zur Druchführung einer Drehung sowie Mittel zum Zusammendrücken zum Zwecke der Verriegelung aufweisen.

5. Werkzeugmaschine nach einem der Ansprüche 1 und 2, dadurch gekennzeichnet, daß die Mittel zur Verriegelung des Kopfes in einer bestimmten Winkelposition ein Paar von sich diametral gegenüberliegenden ausdehnbaren Ringen aufweisen, die auf der feststehenden Scheibe des Support (2) vorgesehen sind und in ein entsprechendes Bohrungspaar der beweglichen mit dem Kopf (5) verbundenen Scheibe eingeführt sind, wobei die feste und die bewegliche Scheibe längs einer Ebene senkrecht zur Rotationsachse (6) unter der Wirkung eines Antriebs, der ein vorgegebenes Zentrierungsspiel aufweist gegeneinander gleiten.

Fig.1

Fig.2

Fig.3

Fig.4

Fig.5

Fig.6

Fig.7

Fig.8

Fig:9

16

11

6

8

17

2

14

Fig.10

4